# EUROPÄISCHE PATENTSCHRIFT

(11) **EP 1 539 021 B1**
(45) Veröffentlichungstag und Bekanntmachung des Hinweises auf die Patenterteilung: **16.07.2008**
(21) Anmeldenummer: 03775163.3
(22) Anmeldetag: 19.09.2003
(51) Int. Cl.: A61C 7/16, A61C 7/00

(54) **LINGUAL-RETAINER**
LINGUAL RETAINER
DISPOSITIF DE RETENTION LINGUALE

(30) Priorität: 20.09.2002 DE 10245008
(43) Veröffentlichungstag der Anmeldung: 15.06.2005
(73) Patentinhaber: DENTAURUM J.P. WINKELSTROETER KG, 75228 Ispringen (DE)
(72) Erfinder: SERNETZ, Friedrich, 75173 Pforzheim (DE)
(74) Vertreter: Wössner, Gottfried
(86) Internationale Anmeldenummer: PCT/EP2003/010478
(87) Internationale Veröffentlichungsnummer: WO 2004/028394

(56) Entgegenhaltungen:
- EP-A- 0 841 877
- US-A- 4 433 960
- US-A- 4 516 938
- US-A- 4 609 350
- US-A- 4 976 614
- US-A- 5 087 202

## Beschreibung

Die Erfindung betrifft eine kieferorthopädische Vorrichtung in Form eines Lingual-Retainers mit einem Bügel, welcher an seinen beiden Enden mit den Zähnen eines Patienten mittels einer Klebeverbindung verbunden werden kann, um in ihrer Stellung korrigierte Zähne des Patienten in der erreichten Zahnstellung zu halten. Der Bügel weist an seinen beiden Enden jeweils ein Klebeflächenelement auf, wobei die Klebeflächenelemente auf ihrer zu verklebenden Oberfläche aufgeraut sind.

Die Lingual-Retainer haben die Aufgabe, nach einer kieferorthopädischen Behandlung die erreichte, korrigierte Zahnstellung der betroffenen Zähne zu halten und zu stabilisieren. Die Lingual-Retainer werden auf der nicht sichtbaren Seite der Zähne (Lingualseite) üblicherweise mit den Zähnen verklebt.

Bisher bekannte Lingual-Retainer bestehen z.B. aus einem Bügel, der z.B. aus einer unvergüteten CoCr-Legierung hergestellt ist, da diese Legierung sicher stellt, dass der Bügel gut biegbar ist, so dass die Klebeflächenelemente in ihrer Lage sehr gut an die Zahnflächen angepasst werden können. Die Klebeflächenelemente wurden durch Anlöten von sogenannten Netzbasen, z.B. aus rostfreiem Stahl, an den Enden des Bügels hergestellt.

Nachteilig bei dieser Art der Lingual-Retainer ist vor allem die Verwendung unterschiedlicher Metalle bzw, Legierungen und das Verbinden der Netzbasis mit dem Bügel mit Loten, wodurch die Korrosionsbeständigkeit des Retainers bzw. dessen Biokompatibilität deutlich herabgesetzt wird. Weiterhin tragen die Klebeflächenelemente auf und reduzieren den Patientenkomfort.

Das US-Patent 5,087,202 beschreibt Einrichtungen zur Festlegung oder Regulierung der gegenseitigen Stellung von Zähnen, bestehend aus mit je einem Zahn durch Kleben zu verbindenden Ankerteilen, die durch Kraftübertragungsglieder miteinander verbunden sind. Als Stand der Technik werden in der Patentschrift biegesteife Klebeschienen angeführt. Weiterhin werden Ankerteile als bekannt beschrieben, die als etwa quadratische Plättchen ausgebildet und mit elastischen Zuggliedern verbunden sind und die an der dem Zahn zugewandten Seite zur Haftungsverbesserung aufgeraut sein können.

Im Gegensatz zu derartigen Einrichtungen wird in dem US-Patent 5,087,202 empfohlen, die Ankerteile als Ringe oder Ringsegmente auszubilden, die über biegesteife Stege miteinander verbunden sind. Im Zuge dessen wird Titan als Werkstoff empfohlen.

Aufgabe der vorliegenden Erfindung ist es, einen Lingual-Retainer zu entwickeln, der die oben genannten materialabhängigen Probleme vermeidet und trotzdem sowohl eine gute Biegbarkeit als auch eine gute Biokompatibilität und einen hohen Patientenkomfort aufweist und damit über lange Zeit (im extremen Fall auch für ein ganzes Leben) ohne gesundheitliche Nebenwirkungen benutzt werden kann.

Diese Aufgabe wird bei dem eingangs erwähnten Lingual-Retainer erfindungsgemäß dadurch gelöst, dass der Retainer aus einem einzigen Material hergestellt ist, welches ausgewählt ist aus Titan oder einer Titanlegierung, und dass der Bügel mit den Klebeflächenelementen einstückig hergestellt ist.

Retainer aus Titan oder Titanlegierungen gemäß der vorliegenden Erfindung sind hochgradig biokompatibel und sind somit ohne gesundheitliche Nebenwirkungen über sehr lange Zeiträume zu benutzen.

Darüber hinaus stellen Titan oder Titanlegierungen Materialien dar, welche wenig steif sind (niedriger Elastizitätsmodul), bei niedriger Dehngrenze gut biegbar sind und welche einfach auf Zähne geklebt werden können.

Bei den erfindungsgemäßen Retainer weist der Bügel an seinen beiden Enden ein Klebeflächenelement auf, mit denen der Bügel besonders einfach und definiert auf die Zähne des Patienten aufgeklebt werden kann.

Alternativ können einfache Retainer, die lediglich aus einem Bügel hergestellt sind, verwendet werden, wobei es sich hier oft um einen Draht handelt (oft auch in verseilter Form), dessen Dehngrenze niedrig ist, damit er gut biegbar ist. Diese einfachen Bügel ohne Klebeflächenelemente werden als solche jeweils auf die Lingualfläche der Zähne angeklebt, die stabilisiert werden sollen.

Unter Verklebung wird im Sinne der vorliegenden Erfindung jede Art einer stoffschlüssigen Verbindung verstanden, Insbesondere kann eine Verklebung mit in der Dentaltechnik üblichen Haftzementen erfolgen, wobei in diesem Zusammenhang insbesondere Glasionomerzemente zu nennen wären.

Auch diese Retainer können für die Verklebung speziell vorbereitet sein, indem an den mit den Zahnoberflächen des Patienten zu verklebenden Bereichen speziell vorbereitete Oberflächenabschnitte vorgesehen sind. Im einfachsten Fall werden es am jeweiligen Ende des Bügels angeordnete Oberflächenabschnitte sein. Weiter bevorzugt weist der Bügel auf seiner zu den Zahnoberflächen weisenden Seite einen oder mehrere weitere Oberflächenabschnitte auf, die für die Verklebung mit den Zähnen vorbereitet sind.

Die Vorbereitung der Oberflächenabschnitte für die Verklebung besteht darin, dass diese aufgerauht sind. Das Aufrauhen kann durch Anätzen, Sandstrahlen, Laserbearbeitung oder mechanisches Bearbeiten, beispielsweise Prägen oder spanende Bearbeitung, geschehen.

Der Retainer wird mit seinem Bügel und den beiden Klebeflächenelementen einstückig hergestellt. Bei Bedarf können die Klebeflächenelemente einen vergrößerten Oberflächenabschnitt für die Verklebung des Retainers mit den Zähnen schaffen.

Weiter bevorzugt weist der Bügel im Wesentlichen dieselbe Dicke auf wie die Klebeflächenelemente, und die Verbindung zwischen Bügel und Klebeflächenelemente ist so ausgeführt, dass der Bügel im Wesentlichen absatzfrei in das Klebeflächenelement übergeht bzw. mit diesem verbunden ist. Dadurch tragen die Klebeflächenelemente nicht auf und der Patientenkomfort ist verbessert.

Im Hinblick auf diese Forderung sowie auf die Forderung nach einer möglichst einfachen Herstellungsweise wird der Retainer bevorzugt aus einem Blechmaterial hergestellt, beispielsweise ausgestanzt.

Hierbei wird die gesamte Form des Retainers, d.h. Bügel einschließlich der an den Bügelenden angeordneten Klebeflächenelemente, aus dem Blechmaterial ausgestanzt oder aus diesem in sonstiger Weise herausgearbeitet, so dass der Retainer über seine gesamten Elemente hin dieselbe Dicke aufweist. Die erforderliche Reststeifigkeit wird durch die okklusal-gingivale Ausdehnung des Bügels eingestellt.

Bei einer weiteren bevorzugten Ausführungsform ist der Bügel des Retainers aus einem verseilten Draht hergestellt. Hierbei wird eine Mehrzahl an Drahtfilamenten zu einem Draht verseilt. Die einzelnen Filamente können identisch oder aber verschieden ausgebildet sein. Somit kann der Fachmann nicht nur über eine Variation der Zahl der Filamente, sondern auch durch deren Auswahl unter dem Gesichtspunkt der mechanischen Festigkeitswerte sehr einfach Retainer mit vorgegebenen mechanischen Eigenschaften gezielt herstellen. Variiert werden kann in diesem Zusammenhang nicht nur der Durchmesser der einzelnen Filamente, sondern auch deren Materialzusammensetzung, so dass beispielsweise mehrere Filamente aus verschiedenen, einander ähnlichen Titanlegierungen einsetzbar sind. Hierbei bleibt die aufgabengemäß geforderte Biokompatibilität erhalten.

Vorteilhafte Retainer lassen sich auch aus halbrunden oder halbovalen Profilmaterialien herstellen, wobei die für die Verklebung vorgesehenen Oberflächenabschnitte dann auf der abgeflachten Seite des Bügels ausgebildet werden.

Dies vermeidet Absätze und Nischen an dem Retainer, die zum einen der Mundhygiene abträglich sind, und bietet zum anderen einen verbesserten Patientenkomfort, weil die Zunge, die sehr kleine Unebenheiten ertasten kann, lediglich auf ein im Wesentlichen gleich dickes und damit ebenes Material trifft.

Die Klebeflächenelemente sind auf ihrer zu verklebenden Oberfläche aufgeraut.

Zur Aufrauung der zu verklebenden Oberfläche der Klebeflächenelemente empfehlen sich unterschiedliche Verfahren, beispielsweise das Sandstrahlen, das chemische Ätzen oder aber auch insbesondere das Laserstrukturieren, d.h. das Bearbeiten mit einem Laserstrahl, wie dies aus der EP 0 841 877 B1 bekannt ist.

Die erfindungsgemäßen Lingual-Retainer aus Titan oder seinen Legierungen sind aus einem Stück gefertig und können ohne Lot und zusätzliche Netzbasen oder zusätzliche Materialien hergestellt werden, so dass die hochgradige Biokompatibilität von Titan und seinen Legierungen voll zum Tragen kommen kann.

Günstigerweise weisen Titan und seine Legierungen einen niedrigen Elastizitätsmodul auf, so dass der Lingual-Retainer bei einer eventuellen Auslenkung durch den zu stützenden Zahn selbst mit geringen Rückstellkräften reagiert. Dem kommt auch die gute Biegbarkeit bzw. die niedrige Dehngrenze bei Titan und seinen Legierungen entgegen, die die Form des Bügels leicht an die jeweiligen Gegebenheiten im Mund eines Patienten anpassbar machen.

Die flache Form, die bevorzugt ist, lässt sich leicht durch das Herstellen des Lingual-Retainers aus einem Titan- oder Titanlegierungsblech bewerkstelligen, beispielsweise durch Stanzen oder Schneiden.

Insbesondere im letzteren Fall ist die Klebefläche bündig mit dem Bügel ausgestaltet und erfährt auch keine Erhöhung durch eine angelötete Netzbasis.

Die zuvor erwähnte Laserstrukturierung (EP 0 841 877 B1) schafft ausreichend Retentionen, die eine lebenslange gute Haftfestigkeit verleiht.

Diese und weitere Vorteile der Erfindung werden im Folgenden anhand der Zeichnungen noch näher erläutert, Es zeigen im Einzelnen:
- Fig. 1:: eine erste ungebogene Ausführungsform eines erfindungsgemäßen Lingual-Retainers;
- Fig. 2:: eine schematische Darstellung eines im Unterkiefer eines Patienten befestigten erfindungsgemäßen Lingual-Retainers; und
- Fig. 3:: eine weitere Ausführungsform eines erfindungsgemäßen Lingual-Retainers.

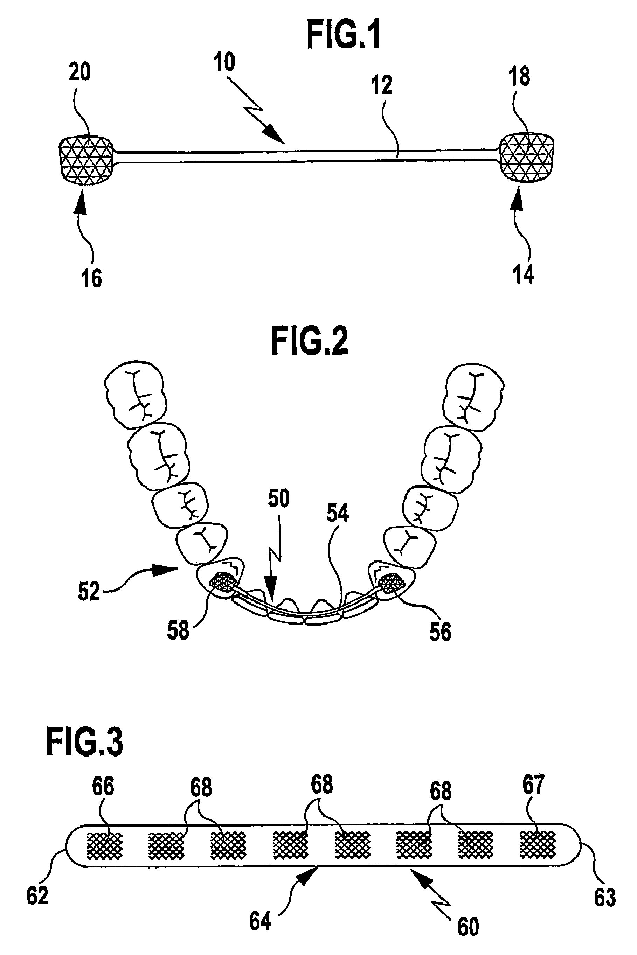

Figur 1 zeigt einen insgesamt mit dem Bezugszeichen 10 versehenen Lingual-Retainer aus z.B. einer Titanlegierung. Der Lingual-Retainer 10 besteht aus einem profilierten Bügel 12 und zwei an seinen jeweiligen Enden angeformten Klebeflächenelementen 14, 16.

Der in Figur 1 dargestellte Lingual-Retainer 10 ist aus einem Titanlegierungsblech als ein Stück ausgestanzt, d.h. die Klebeflächenelemente 14 und 16 sowie der Bügel 12 sind einstückig ausgebildet. Darüber hinaus weist der Lingual-Retainer 10 über seine gesamte Länge die gleiche Dicke auf, so dass dies der Mundhygiene, durch Vermeiden von Absätzen, und auch dem Patientenkomfort (lingual wenig störend) dient.

Die Klebeflächenelemente 14 und 16 weisen auf ihrer mit einem Zahn eines Patienten zu verklebenden Oberfläche 18 bzw. 20 eine Aufrauung in Form einer gitterförmigen Laserstrukturierung auf. Dadurch entfällt das ansonsten notwendige Anlöten einer sogenannten Netzbasis, was sich zum einen bei der Biokompatibilität des erfindungsgemäßen Lingual-Retainers vorteilhaft bemerkbar macht und zum anderen Arbeitsschritte einspart, da die Strukturierung mittels Laser sehr viel einfacher und kostengünstiger zu bewerkstelligen ist. Korrosionsprobleme werden darüber hinaus vermieden, da das Eintragen von weiteren, von Titan oder seiner Legierung verschiedenen Materialien durch die Art der Ausführung der KlebefiTächen 18 bzw, 20 vermieden ist.

Alternativ könnten die Klebeflächen 18, 20 auch sandgestrahlt oder chemisch angeätzt sein, wobei stets nur notwendig ist, dass eine ausreichende Oberflächenrauigkeit, insbesondere auch Hinterschneidung an der Oberfläche, erzielt wird, die für ein sicheres Verankern der Klebemittel auf der Klebefläche 18 bzw. 20 sorgt.

Figur 2 zeigt schematisch eine typische Einbausituation für einen Lingual-Retainer am Beispiel eines Lingual-Retainers 50, welcher einen Bügel 54 und daran angeformte Klebeflächenelemente 56, 58 aufweist.

Die Klebeflächenelemente 56, 58 sind auf Seite der Zunge mit z.B. den Eckzähnen des Unterkiefers 52 eines Patienten über eine Klebeverbindung verbunden und halten diese sowie die dazwischen liegenden Schneidezähne in einer zuvor mit einer anderen kieferorthopädischen Vorrichtung in ihrer Zahnstellung korrigierten Zähne in dem erreichten Zustand. Figur 3 zeigt eine alternative Ausführungsform eines erfindungsgemäßen Retainers 60 aus einem Titanprofilmaterial mit halbrundem Querschnitt. Im Gegensatz zu den in den Figuren 1 und 2 gezeigten Retainern weist der Lingual-Retainer 60 an den Enden 62, 63 seines Bügels 64 keine vergrößerten Oberflächenabschnitte für die Verklebung mit dem Zahnoberflächen auf, sondern die Oberflächenabschnitte 66, 67 beschränken sich auf die plane Fläche des Halbrundprofils.

Figur 3 illustriert darüber hinaus, dass bei den erfindungsgemäßen Lingual-Retainem bevorzugt entlang des Bügels 64 zwischen den Oberflächenabschnitten 66 und 67 weitere Oberflächenabschnitte 68 im Zahnabstand von einander beabstandet ausgebildet sind, so dass dieser Lingual-Retainer 60 bei Bedarf an jedem von dem Bügel 64 erfassten Zahn mit einer Klebestelle fixiert werden kann.

## Patentansprüche

1. Kieferorthopädische Vorrichtung in Form eines Lingual-Retainers (10,50,60) mit einem Bügel (12,54,64), wobei der Bügel (12,54,64), an seinen beiden Enden jeweils ein Klebeflächenelement (14,16,56,58), aufweist und wobei die Klebetlächenelement (14,16,56,58), auf ihrer zu verklebenden Oberfläche (18,20,66,67), aufgeraut sind, **dadurch gekennzeichnet, dass** der Retainer (10,50,60), aus einem einzigen Material hergestellt ist, welches ausgewählt ist aus Titan oder einer Titanlegierung, und dass der Bügel (12,54,64), mit den Klebeflächenelementen (14,16,56,58) einstückig hergestellt ist.

2. Vorrichtung nach Anspruch 1, **dadurch gekennzeichnet, dass** der Bügel (12,54,64) im Wesentlichen dieselbe Dicke wie die Klebeflächenelemente (14,16,56,58) aufweist und dass der Bügel (12,54,64) im Wesentlichen absatzfrei mit dem Klebeflächenelement (14,16,56,58) verbunden ist.

3. Vorrichtung nach Anspruch 1 oder 2, **dadurch gekennzeichnet, dass** der Bügel (12,54,64) aus einem Blechmaterial hergestellt ist.

4. Vorrichtung nach Anspruch 1, **dadurch gekennzeichnet, dass** der Bügel (12,54,64) aus einem verseilten Draht hergestellt ist.

5. Vorrichtung nach einem der Ansprüche 1 bis 4, **dadurch gekennzeichnet, dass** die Aufrauung der zu verklebenden Oberfläche (18,20,66,67) der Klebeflächenelement (14,16,56,58) mittels Sandstrahlen, Ätzen oder Laserstrukturieren hergestellt ist.

6. Vorrichtung nach einem der Ansprüche 1 bis 5, **dadurch gekennzeichnet, dass** der Büge (12,54,64), Pein profilierter Bügel ist, wobei der Bügel (12,54,64), im Querschnitt insbesondere ein halbrundes oder halbovales Profil aufweist.

7. Vorrichtung nach einem der Ansprüche 1 bis 6, **dadurch gekennzeichnet, dass** der Bügel (64) an seinen Enden (62,63) und/oder dazwischen auf Seiten seiner den Zähnen eines Patienten zugewandten Oberfläche Oberflächenabschnitte (66,67,68) aufweist, weiche zur Aufnahme von Klebernitteln aufgeraut sind.

## Claims

1. Orthodontic appliance in the form of a lingual retainer (10, 50, 60) comprising a bow (12, 54, 64), wherein the bow (12, 54, 64) has a bonding surface element (14, 16, 56, 58) at each of its two ends, and wherein the bonding surface elements (14, 16, 56, 58) are roughened on their surface to be bonded (18, 20, 66, 67), **characterized in that** the retainer (10, 50, 60) is fabricated from only one material selected from titanium or a titanium alloy, and **in that** the bow (12, 54, 64) is fabricated with the bonding surface elements (14, 16, 56, 58) as one piece.

2. Appliance in accordance with claim 1, **characterized in that** the bow (12, 54, 64) has substantially the same thickness as the bonding surface elements (14, 16, 56, 58), and **in that** the bow (12, 54, 64) is joined substantially offset-free to the bonding surface element (14, 16, 56, 58).

3. Appliance in accordance with claim 1 or 2, **characterized in that** the bow (12, 54, 64) is fabricated from a sheet metal material.

4. Appliance in accordance with claim 1, **characterized in that** the bow (12, 54, 64) is fabricated from a stranded wire.

5. Appliance in accordance with any one of claims 1 to 4, **characterized in that** the roughening of the surface to be bonded (18, 20, 66, 67) of the bonding surface elements (14, 16, 56, 58) is produced by sandblasting, etching or laser structuring.

6. Appliance in accordance with any one of claims 1 to 5, **characterized in that** the bow (12, 54, 64) is a profiled bow, and the bow (12, 54, 64) has a profile of, in particular, half-round or half-oval cross section.

7. Appliance in accordance with any one of claims 1 to 6, **characterized in that** the bow (64) has surface regions (66, 67, 68) which are roughened for the accommodation of bonding agents at its ends (62, 63) and/or therebetween on that side of its surface which faces a patient's teeth.

## Revendications

1. Dispositif orthodontique sous la forme d'un dispositif de rétention linguale (10, 50, 60) avec un étrier (12, 54, 64), ledit étrier (12, 54, 64) comportant un élément à surface de collage (14, 16, 56, 58), et les éléments à surface de collage (14, 16, 56, 58) étant rugosifiés sur leurs surfaces à coller (18, 20, 66, 67), **caractérisé en ce que** le dispositif de rétention linguale (10, 50, 60) est façonné dans une seule matière, choisie entre le titane et un alliage de titane, et **en ce que** l'étrier (12, 54, 64) est façonné d'un seul tenant avec les éléments à surface de collage (14, 16, 56, 58).

2. Dispositif selon la revendication 1, **caractérisé en ce que** l'étrier (12, 54, 64) présente sensiblement la même épaisseur que les éléments à surface de collage (14, 16, 56, 58), et **en ce que** l'étrier (12, 54, 64) est raccordé sensiblement sans épaulement à l'élément à surface de collage (14, 16, 56, 58).

3. Dispositif selon la revendication 1 ou 2, **caractérisé en ce que** l'étrier (12, 54, 64) est façonné en fer blanc.

4. Dispositif selon la revendication 1, **caractérisé en ce que** l'étrier (12, 54, 64) est façonné à partir d'un fil métallique toronné.

5. Dispositif selon l'une des revendications 1 à 4, **caractérisé en ce que** la rugosification de la surface à coller (18, 20, 66, 67) des éléments à surface de collage (14, 16, 56, 58) est réalisée par sablage, gravure chimique ou structuration laser.

6. Dispositif selon l'une des revendications 1 à 5, **caractérisé en ce que** l'étrier (12, 54, 64) est un étrier profilé, la section transversale dudit étrier (12, 54, 64) présentant notamment un profil semi-circulaire ou semi-ovale.

7. Dispositif selon l'une des revendications 1 à 6, **caractérisé en ce que** l'étrier (64) comporte des sections des surface (66, 67, 68) rugosifiées pour la réception d'adhésifs sur ses extrémités (62, 63) et/ou entre celles-ci, sur sa face tournée vers les dents d'un patient.
